# EUROPEAN PATENT APPLICATION

(11) **EP 4 524 897 A1**
(43) Date of publication of application: **19.03.2025**
(21) Application number: 23915184.8
(22) Date of filing: 27.07.2023
(51) Int. Cl.: G06T 15/20

(54) **IMAGE PROCESSING DEVICE, IMAGE PROCESSING METHOD, AND IMAGE PROCESSING PROGRAM**

(71) Applicant: Rakuten Group, Inc., Setagaya-ku Tokyo 158-0094 (JP)
(72) Inventor: BARSOPIA, Vivek, Tokyo 1580094 (JP); ROXAS, Menandro, Tokyo 1580094 (JP)
(74) Representative: EIP
(86) International application number: PCT/JP2023/027609
(87) International publication number: WO 2025/022665

(57) **Abstract**

It is aimed at performing image transformation suitable for character recognition on a query image in which a plurality of regions are image-captured. An image processing apparatus 1 includes a query image acquisition unit 21 that acquires the query image in which a plurality of objects are image-captured, a normal line estimation unit 25 that estimates, for each of the plurality of objects image-captured in the query image, a normal line direction indicating a front direction of the object, a representative normal line determination unit 26 that determines a representative normal line direction representing an entirety of the query image on the basis of the plurality of normal line directions estimated for the plurality of objects, and a transformation unit 27 that geometrically transforms the query image on the basis of the representative normal line direction to generate a corrected query image.

## Description

### [Technical Field]

The present disclosure relates to an image processing technology.

### [Background Art]

Conventionally, a recognition apparatus has been proposed which includes a vehicle detection unit that cuts out a peripheral image of a number plate from an image acquired from an image capturing apparatus, a number plate detection unit that extracts a front image of the number plate from the peripheral image of the number plate, a character recognition unit that recognizes a vehicle registration number from the front image of the number plate, a reliability determination unit that determines, on the basis of a level of recognition difficulty of the character recognition unit, an ability of the number plate detection unit to extract the front image, and a model change unit that changes the ability of the number plate detection unit to extract the front image on the basis of a result of the determination by the reliability determination unit (see PTL 1).

Meanwhile, a technology of decomposing a homography matrix to estimate a displacement of a camera between two images of a flat object is conventionally known (see NPL 1).

### [Citation List]

### [Patent Literature]

[PTL 1] Japanese Patent Application Publication No. 2020-160814

### [Non Patent Literature]

[NPL 1] Ezio Malis, Manuel Vargas, "Deeper understanding of the homography decomposition for vision-based control", INSTITUT NATIONAL DE RECHERCHE EN INFORMATIQUE ET EN AUTOMATIQUE, September 25, 2007, RR-6303

### [Summary of Invention]

### [Technical Problem]

Conventionally, various technologies for recognizing a predetermined target (such as an image-captured object or character) included in an image have been proposed, but there is room for improvement in accuracy of the recognition of the target in the image. In view of the problem described above, the present disclosure is aimed at improving accuracy of recognition of a predetermined target included in an image.

### [Solution to Problem]

An example of the present disclosure is an image processing apparatus including: a query image acquisition means that acquires a query image in which a plurality of objects are image-captured; a normal line estimation means that estimates, for each of the plurality of objects image-captured in the query image, a normal line direction indicating a front direction of the object; a representative normal line determination means that determines a representative normal line direction representing an entirety of the query image on the basis of the plurality of normal line directions estimated for the plurality of objects; and a transformation means that geometrically transforms the query image on the basis of the representative normal line direction to generate a corrected query image.

The present disclosure can be recognized as a method to be implemented by the image processing apparatus, a system, and a computer or as a program to be executed by the computer. The present disclosure can also be recognized as such a program recorded in a recording medium which is readable by the computer, another apparatus, a machine, or the like. The recording medium readable by the computer or the like mentioned herein refers to a recording medium which stores therein information such as data or a program by electric, magnetic, optical, mechanical, or chemical action and allows the information to be read by the computer or the like.

### [Advantageous Effects of Invention]

According to the present disclosure, it is possible to improve accuracy of recognition of a predetermined target included in an image.

### [Brief Description of Drawings]

[Fig. 1] Fig. 1 is a schematic view illustrating a configuration of a system according to an embodiment.
[Fig. 2] Fig. 2 is a diagram illustrating an overview of a functional configuration of an image processing apparatus according to the embodiment.
[Fig. 3] Fig. 3 is a diagram illustrating an example of a query image in the embodiment.
[Fig. 4] Fig. 4 is a diagram illustrating an example in which geometrical transformation according to a conventional method is performed on the query image in the embodiment.
[Fig. 5] Fig. 5 is a flow chart illustrating a flow of image transformation and character recognition processing according to the embodiment.
[Fig. 6] Fig. 6 is a diagram illustrating an example of respective normal line vectors estimated for two objects related to different directions in the embodiment.
[Fig. 7] Fig. 7 is a diagram illustrating an example of respective minimum-ratio normal line vectors and respective maximum-ratio normal line vectors which are estimated for a plurality of individual objects in the query image in the embodiment.
[Fig. 8] Fig. 8 is a diagram representing a concept of calculation of a representative normal line vector based on the plurality of minimum-ratio normal line vectors and the plurality of maximum-ratio normal line vectors which are estimated for the two respective objects related to the different directions in the embodiment.
[Fig. 9] Fig. 9 is a diagram illustrating an example in which geometrical transformation based on the representative normal line vector is performed on the query image in the embodiment.

### [Description of Embodiments]

The following will describe a mode of implementation of an image processing apparatus, an image processing method, and an image processing program according to the present disclosure on the basis of the drawings. However, the mode of implementation described below is illustrative of an embodiment, and is not intended to limit the image processing apparatus, the image processing method, and the image processing program according to the present disclosure to specific configurations described below. In implementation, the specific configurations according to the mode of implementation are adopted as appropriate, and various improvements and modifications can be made therein.

Conventionally, it has been practiced to perform geometrical transformation which causes a region included in an image acquired by image capturing or the like and intended to be a target of character recognition to face front and then perform the character recognition. However, in a case where the image includes a plurality of the regions each intended to be the target of the character recognition and surfaces (front surfaces) on which characters to be recognized are written in these plurality of regions face different directions or projections are different due to positional relationships with a camera used for the image capturing, even when the geometrical transformation that causes any region to face front is performed, the region caused to face front is brought into a state appropriate for the character recognition, but another region is not brought into the state appropriate for the character recognition. In other words, a conventional technology has room for improvement in improving recognition accuracy in a case where the plurality of regions to be subjected to the character recognition are located apart from each other in the same image. In view of the problem described above, the present disclosure is aimed at performing image transformation appropriate for character recognition on a query image in which a plurality of regions are image-captured.

The present embodiment will describe a mode of implementation of a technology according to the present disclosure in which image transformation appropriate for character recognition is performed on a query image in which a plurality of objects are image-captured, and then character recognition processing is performed on an image after the transformation. However, the technology according to the present disclosure can be used widely to perform the image transformation appropriate for the character recognition on the query image in which the plurality of regions are image-captured, and an application target of the present disclosure is not limited to an example shown in the embodiment. For example, the object may also be an object rendered in a virtual space or an object rendered using rendering software, not a tangible entity. Meanwhile, for example, an image may also be an image obtained by rendering a virtual space or an image rendered using rendering software, not an image obtained by image-capturing a real world.

### <System Configuration>

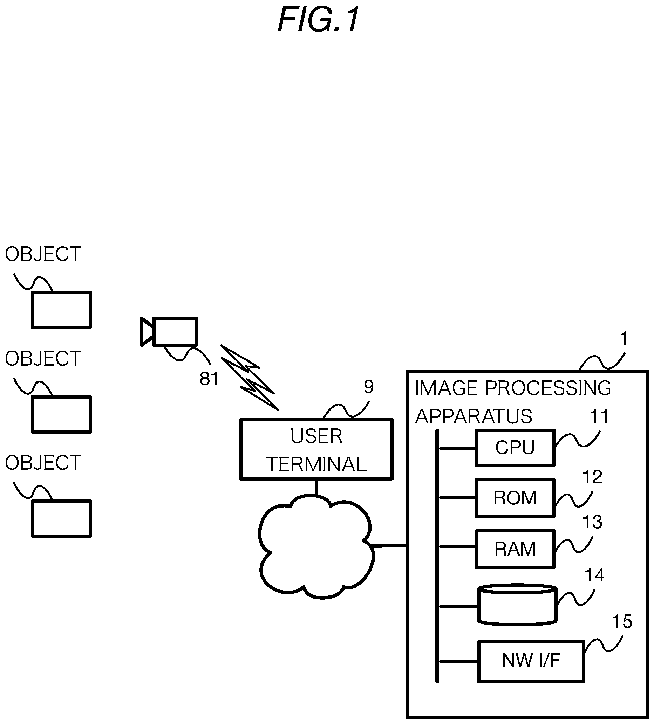

Fig. 1 is a schematic diagram illustrating a configuration of a system according to the present embodiment. The system according to the present embodiment includes an image processing apparatus 1, an image capturing apparatus 81, and a user terminal 9 which are connected to a network to be communicative with each other.

The image processing apparatus 1 is a computer including a CPU (Central Processing Unit) 11, a ROM (Read Only Memory) 12, a RAM (Random Access Memory) 13, a storage device 14 such as an EEPROM (Electrically Erasable and Programmable Read Only Memory) or a HDD (Hard Disk Drive), a communication unit 15 such as a NIC (Network Interface Card), and the like. However, with regard to a specific hardware configuration of the image processing apparatus 1, omissions, substitutions, and additions can be made as appropriate according to the mode of implementation. Additionally, the image processing apparatus 1 is not limited to an apparatus including a single housing. The image processing apparatus 1 may also be implemented by a plurality of apparatuses using a so-called cloud, distributed computing technology, or the like.

The image capturing apparatus 81 captures an image of a target to obtain a query image described later. For the image capturing apparatus 81, a typical digital camera or another apparatus capable of recording light incident thereon from the target may be used appropriately, and a specific configuration thereof is not limited.

The user terminal 9 is a terminal apparatus to be used by a user. The user terminal 9 is a computer including a CPU, a ROM, a RAM, a storage device, a communication unit, an input device, an output device, and the like (the illustration thereof is omitted). However, with regard to a specific hardware configuration of the user terminal 9, omissions, substitutions, and additions can be made as appropriate according to the mode of implementation. Additionally, the user terminal 9 is not limited to an apparatus including a single housing. The user terminal 9 may also be implemented by a plurality of apparatuses using a so-called cloud, distributed computing technology, or the like. The user uses various services provided by the system according to the present embodiment via these user terminals 9.

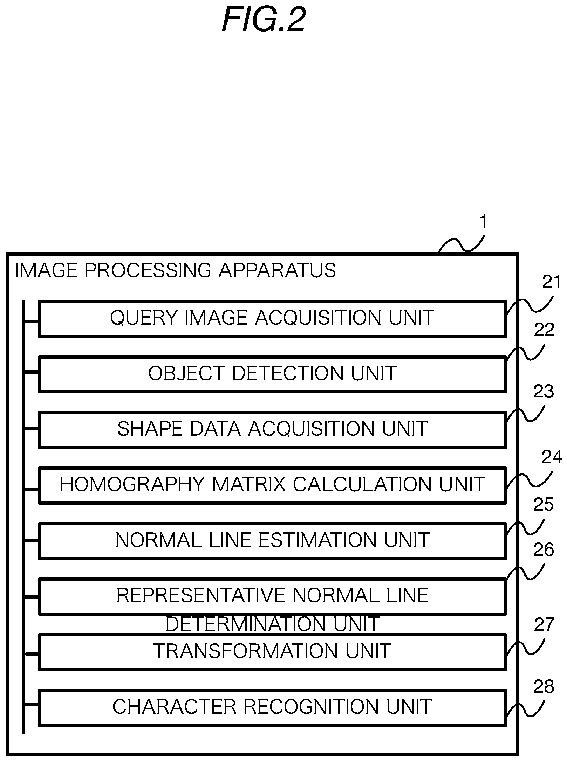

Fig. 2 is a diagram illustrating an overview of a functional configuration of the image processing apparatus 1 according to the present embodiment. In the image processing apparatus 1, a program recorded in the storage device 14 is read into the RAM 13 and executed by the CPU 11 to control each hardware item included in the image processing apparatus 1 and thereby allow the image processing apparatus 1 to function as an image processing apparatus including a query image acquisition unit 21, an object detection unit 22, a shape data acquisition unit 23, a homography matrix calculation unit 24, a normal line estimation unit 25, a representative normal line determination unit 26, a transformation unit 27, and a character recognition unit 28. Note that, in the present embodiment and another embodiment described later, each of functions included in the image processing apparatus 1 is performed by the CPU 11, which is a versatile processor, but some or all of these functions may also be performed by one or a plurality of dedicated processors.

The query image acquisition unit 21 acquires the query image resulting from simultaneous image capturing of a plurality of objects serving as targets of image processing and/or character recognition. A method of acquiring the query image is not limited and, in the present embodiment, a description will be given of an example in which the query image captured by using the image capturing apparatus 81 is acquired via the user terminal 9.

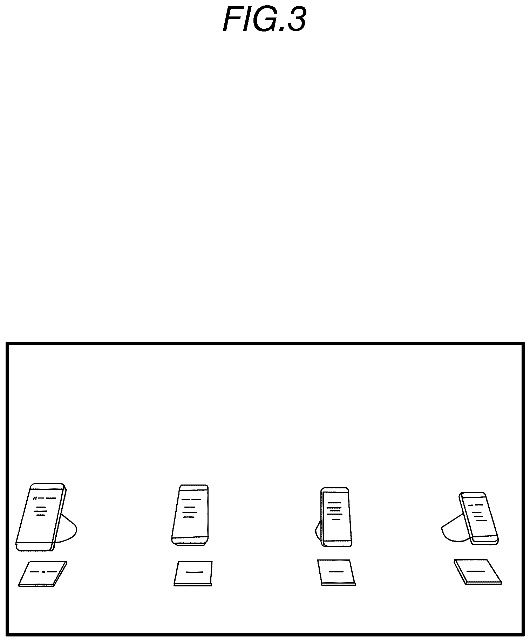

Fig. 3 is a diagram illustrating an example of the query image in the present embodiment. The present diagram illustrates the query image resulting from image capturing of a plurality of smartphones placed on a table at a store with product information being displayed on displays with touch panels thereof and media for explanation (hereinafter referred to simply as "product information cards") having information such as explanation and prices of the plurality of individual smartphones, which are placed in the vicinities of the smartphones. A person in charge takes a photograph at a location where the plurality of smartphones and the plurality of product information cards, which serve as target objects of the image processing and character recognition in the present embodiment, are present such that these objects are included in the same image.

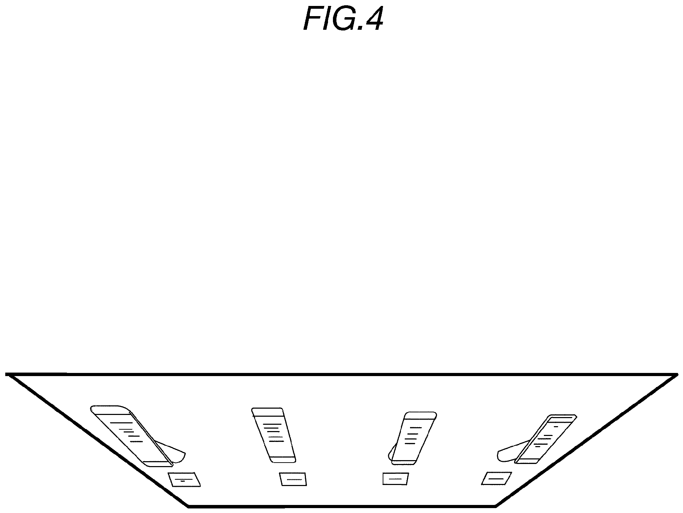

Fig. 4 is a diagram illustrating an example in which geometrical transformation according to a conventional method is performed on the query image in the present embodiment. According to the present diagram, it will be understood that, when, e.g., the image transformation is performed such that the product information card at a center of the query image directly faces a camera, the center product information card directly facing the camera as a result of the transformation is in a state appropriate for character recognition, but another object, particularly the smartphones at the ends of a screen each having a front direction (since each of the objects in the present embodiment is the target of the character recognition, it is assumed hereinafter that a normal line direction of a surface with a character to be recognized, which is displayed on the object, is the front direction) greatly different from that of the center product information card are increasingly distorted, and accuracy of the character recognition deteriorates. It will additionally be understood that, before the image transformation, the smartphones and the product information cards corresponding to the smartphones have vertically aligned positional relationships therebetween (see Fig. 3) but, after the image transformation, respective positions of the smartphones and the product information cards corresponding to the smartphones are misaligned in a vertical direction, and it is difficult to associate the smartphones with the product information cards.

When a problem as described above is to be solved, it is considered to perform image transformation which causes each of the plurality of objects included in the query image to face front and perform character recognition on the object. However, when such a method is adopted, it is necessary to perform the image transformation and character recognition processing the same number of times as the number of the objects in the query image. Accordingly, in the system according to the present embodiment, it is intended to increase the accuracy of the character recognition, while reducing the number of times the image transformation and character recognition processing is performed on the one query image.

The object detection unit 22 detects the plurality of object images from the query image. In the present embodiment, the object detection unit 22 uses a machine learning model which outputs, in response to an input of a type or attribute of the object intended to be the target of the character recognition, a position or range in the query image in which the object related to the type or attribute is image-captured to detect the plurality of objects mage-captured in the query image. However, a type of an object detection technology to be used at the time of the object detection from the image is not limited and, besides the currently known object detection technology, any object detection technology that will be developed in future may also be used.

The shape data acquisition unit 23 acquires shape data related to a front shape of the object. For example, the shape data may be an aspect ratio, a size, design data, a front image, or the like of the object which is held in advance in the RAM 13, the storage device 14, or the like. The shape data may also be data which uniquely determines at least the front shape of each of the objects related to the same type or attribute.

However, even though the objects are related to the same type or object, depending on a specified type or attribute, the front shape of each of the objects related to the type or attribute may not be uniquely determined. For example, when the object is specified to a "smartphone manufactured by xx company, model No. XX-XX" or a "B8 size card", the shape thereof can uniquely be determined but, when the object is specified merely to a "smartphone", a "smartphone manufactured by xx company", or a "product information card", the shape thereof ranges widely. Accordingly, in the present embodiment, the shape data may also be shape data having a range for the objects each related to the same type or attribute. The shape data having the range may also be a range of the aspect ratio of the object, a range of the size thereof, a plurality of the front images thereof, or the like. In the present embodiment, by way of example, a case where the range of the aspect ratio of the object is used as the shape data will be described.

The homography matrix calculation unit 24 calculates, for each of the plurality of objects, a homography matrix between the front shape of the object specified on the basis of the shape data and the object image related to the object in the query image. When the shape data has the range as described above, the homography matrix calculation unit 24 calculates, for each of the plurality of objects, a homography matrix related to a minimum value in the range of the shape data and a homography matrix related to a maximum value therein.

The normal line estimation unit 25 estimates, for each of the plurality of objects image-captured in the query image, the normal line direction indicating the front direction of the object. **In** the present embodiment, the normal line estimation unit 25 estimates, for each of the plurality of objects, the normal line direction (normal line vector) of the object on the basis of the homography matrices calculated by the homography matrix calculation unit 24 to estimate the normal line direction according to a result of comparison between the front shape of the object specified on the basis of the shape data and the object image in the query image.

However, a specific method for estimating the normal line direction of the object is not limited to the calculation of the normal line vector from the homography matrix. In addition, when the shape data has the range as described above, the normal line estimation unit 25 calculates, for each of the plurality of objects, the normal line direction related to the minimum value in the range of the shape data and the normal line direction related to the maximum value therein.

The representative normal line determination unit 26 determines the representative normal line direction representing the entire query image on the basis of the plurality of normal line directions estimated for the plurality of objects. In the present embodiment, the representative normal line determination unit 26 uses a mean value of the plurality of normal line vectors estimated for the plurality of objects as a representative normal line vector, and determines a direction of the representative normal line vector to be the representative normal line direction. However, the representative normal line direction may be acquired appropriately by a method of using a statistic method to obtain a direction serving as a representative, and may also be calculated by a method other than the calculation of the mean value of the normal line vectors. In addition, when the shape data has the range as described above, the representative normal line determination unit 26 determines, to be the representative normal line direction, a normal line direction representing the plurality of normal line directions related to the minimum value in the range of the shape data which are estimated for the plurality of individual objects and the plurality of normal line directions related to the maximum value in the range of the shape data which are estimated for the plurality of individual objects.

The transformation unit 27 geometrically transforms the query image on the basis of the representative normal line direction to generate the corrected query image. In the present embodiment, the transformation unit 27 performs projective transformation on the query image such that the representative normal line direction corresponds to the front direction of an image after the transformation to generate the corrected query image.

The character recognition unit 28 performs character recognition processing on the corrected query image to recognize a character written on the object intended to be the target of the character recognition. The technology according to the present disclosure is aimed at providing image transformation appropriate for the character recognition, and a specific algorithm to be adopted for the character recognition is not limited. For the character recognition, a character recognition technology which has been used conventionally or will be developed in future may also be adopted.

### <Flow of Processing>

Next, a flow of processing to be performed by the image processing apparatus according to the present embodiment will be described. Note that a specific content of the processing described below and an order of the processing are examples for carrying out the present disclosure. The specific content of the processing and the order of the processing may be selected appropriately according to the mode of implementation of the present disclosure.

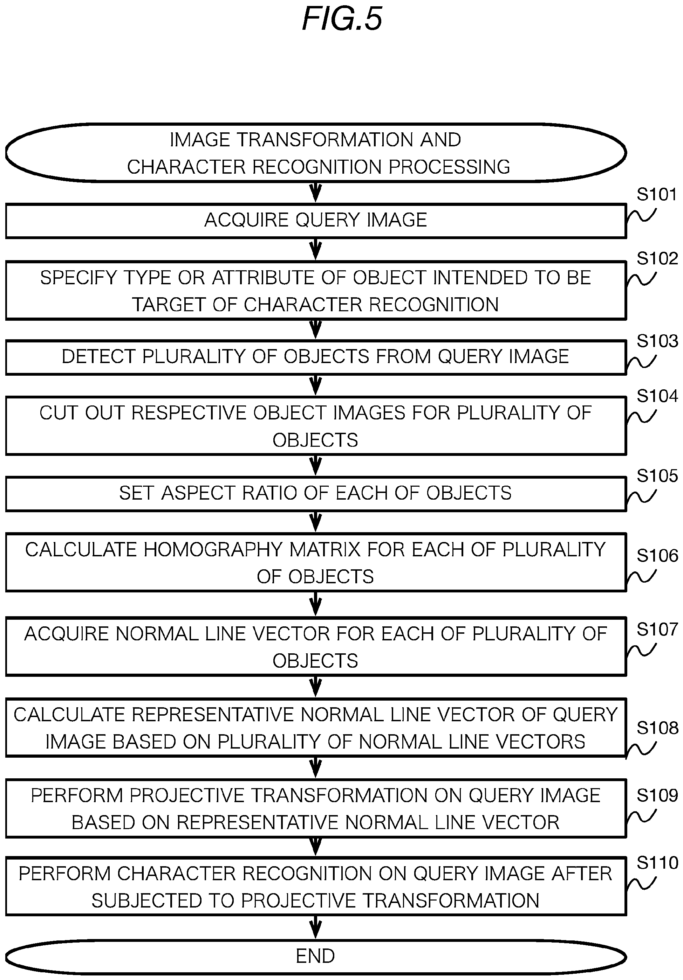

Fig. 5 is a flow chart illustrating a flow of the image transformation and character recognition processing according to the present embodiment. The processing illustrated in the present flow chart is performed by being triggered by reception of an instruction to start the processing from the user.

In Step S101, the query image is acquired. An operator captures an image of a target by using the image capturing apparatus 81, and inputs image data of the obtained query image to the image processing apparatus 1. In the present embodiment, the image capturing target is the in-store table on which the smartphones and the product information cards each serving as the predetermined object are placed. An image capturing method and a method of inputting the image data to the image processing apparatus 1 are not limited but, in the present embodiment, an image of the target is captured using the image capturing apparatus 81, and the image data transferred from the image capturing apparatus 81 to the user terminal 9 by communication or via a recording medium is further transferred to the image processing apparatus 1 via a network to allow the image data of the query image to be input to the image processing apparatus 1. When the query image is acquired by the query image acquisition unit 21, the processing advances to Step S102.

In Step S102, objects each intended to be the target of the character recognition are specified. The object detection unit 22 acquires object specification information indicating the type or attribute of each of the objects intended to be the target of the character recognition among the objects image-captured in the query image. In the present embodiment, an example is described in which, among the objects image-captured in the query image in which the in-store table is image-captured, each of the smartphones displayed as products and the product information cards for the smartphones is used as the target of the character recognition. Accordingly, in the present embodiment, as object identification information, e.g., "smartphone" and "tag" are input. Note that, in the present embodiment, an example is described in which the object specification information is acquired as text data input by the user from a prompt of a UI, but a method of acquiring the object identification information is not limited to the example shown in the present embodiment. For example, the object identification information may also be acquired in a format (e.g., a code indicating the type or attribute of the object) other than the text data or, alternatively, the object identification information may also be acquired by being set in advance to the system before the acquisition of the query image. Subsequently, the processing advances to Step S103.

In Step S103 and Step S104, the objects are detected from the query image, and ranges in the query image in which the objects are image-captured are cut out as the object images. The object detection unit 22 detects, from the query image acquired in Step S101, the plurality of objects of the type or attribute specified by the object specification information acquired in Step S102 (Step S103). It is preferable herein that, among the objects image-captured in the query image, all the objects of the type or attribute specified by the object specification information are detected. In the present embodiment, for the object detection from the query image, e.g., a zero-shot object detector using a convolutional neural network (CNN) may be used. However, the type of an algorithm used at the time of the object detection from the image is not limited and, besides the currently known algorithm, any algorithm that will be developed in future may also be used.

When the plurality of objects are detected from the query image, the object detection unit 22 cuts out, for the plurality of detected objects, the ranges in which the objects are image-captured as the object images from the query image (Step S104). However, the image data of the object images need not be newly generated and, for the object images, the ranges thereof in the query image need only to be specified. Subsequently, the processing advances to Step S105.

In Step S105, an aspect ratio (length-to-width ratio) of each of the objects is set. The shape data acquisition unit 23 sets, for each of the plurality of objects detected in Step S103, the aspect ratio according to the type or attribute of the object. Specifically, the shape data acquisition unit 23 chooses the aspect ratio related to a part or the whole of a configuration of the object when the object is viewed from the front (when viewed in plan view), which is held in advance on a per object type or attribute basis, on the basis of the type or attribute of the detected object, and sets the chosen aspect ratio as the aspect ratio of the object. The type or attribute of the object can be identified herein on the basis of the object specification information input in Step S102 or an output obtained from the object detector in Step S103. In the present embodiment, for the object "smartphone" detected from the query image, the aspect ratio held in advance as the aspect ratio of the smartphone is set and, for the object "product information card", the aspect ratio held in advance as the aspect ratio of the product information card is set.

Note that the aspect ratio set herein may also have a range. For example, a smartphone has a different aspect ratio depending on a model. Accordingly, in the present embodiment, the aspect ratio of the smartphone is set in a range from a minimum value to a maximum value, such as "from 0.479 to 0.486". When the aspect ratio (length-to-width ratio) of each of the objects is set, the processing advances to Step S106.

In Step S106 and Step S107, the homography matrix and normal line vector of each of the objects are calculated. The homography matrix calculation unit 24 calculates, for each of the plurality of objects detected in Step S103, the homography matrix by using the range of the aspect ratio set in Step S105. First, the homography matrix calculation unit 24 detects, for each of the objects, predetermined components of the object from the object image, and causes the detected components to match predetermined components related to the set aspect ratio. In the present embodiment, the objects are the smartphones and the product information cards, and each of the smartphones and the product information cards typically has a substantially rectangular shape. Accordingly, the homography matrix calculation unit 24 detects vertices (corners) of the rectangular shapes related to the objects, and causes the detected vertices to match vertices of rectangular shapes related to the set aspect ratios.

For a means for detecting the predetermined components (the vertices of the rectangular shapes in the present embodiment) of the objects from the object images, e.g., an image analysis technology for detecting feature points in the images may also be used. However, the type of the image analysis technology to be used at the time of detection of the predetermined components from the object images is not limited and, besides the currently known image analysis technology, any image analysis technology that will be developed in future may also be used.

When the matching of the predetermined components detected from the objects with the predetermined components related to the set aspect ratios is completed, the homography matrix calculation unit 24 compares the rectangular shapes of the objects in the matched object images to the set aspect ratios to thereby calculate the homography matrix of each of the objects (Step S106).

When the homography matrix is calculated, the normal line estimation unit 25 decomposes, for each of the plurality of object images detected in Step S103, the homography matrix obtained in Step S106 to obtain the normal line vector of the object (Step S107. Note that, for details of a method of estimating the normal line vector of two flat objects by decomposing the homography matrix, see NPL 1).

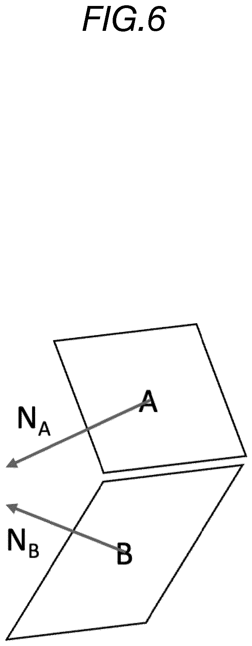

Fig. 6 is a diagram illustrating an example of normal line vectors N_{A} and N_{B} individually estimated for two objects A and B related to different directions. Since the aspect ratio used when each of the homography matrices is calculated is the aspect ratio when the object is viewed from the front, the normal line vector calculated in the present embodiment is the normal line vector indicating the front direction of the object. In addition, each of the normal line vectors calculated in the present embodiment is calculated on the basis of the aspect ratio having the range, and is therefore a normal line vector having a range from a normal line vector calculated on the basis of a minimum aspect ratio (hereinafter referred to as the "minimum-ratio normal line vector") to a normal line vector calculated on the basis of a maximum aspect ratio (hereinafter referred to as the "maximum-ratio normal line vector").

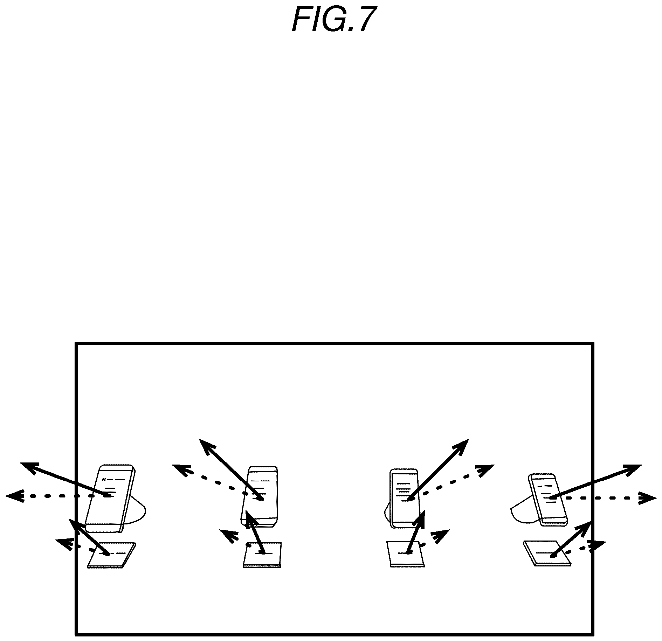

Fig. 7 is a diagram illustrating an example of the minimum-ratio normal line vectors (indicated by broken lines) and the maximum-ratio normal line vectors (indicated by solid lines) which are estimated for the plurality of individual objects in the query image in the present embodiment. When the normal line vectors are calculated for the plurality of detected objects, the processing advances to S 108.

In Step S108, the representative normal line vector is determined. The representative normal line determination unit 26 determines, on the basis of the plurality of normal line vectors calculated for the plurality of objects in Step S107, the representative normal line vector representing the query image including these objects. In the present embodiment, the representative normal line determination unit 26 determines a mean of the normal line vectors calculated for the plurality of individual objects to be the representative normal line vector. However, a method of determining the representative normal line vector is not limited to the calculation of the mean value, and a method of obtaining a vector serving as a representative by using a statistical method may also be adopted.

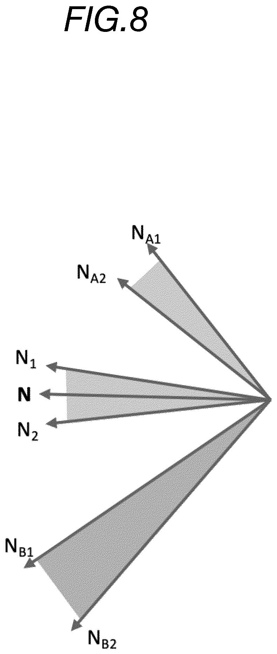

Fig. 8 is a diagram illustrating a concept of calculation of a representative normal line vector N based on a plurality of minimum-ratio normal line vectors N_{A1} and N_{B1} and a plurality of maximum-ratio normal line vectors N_{A2} and N_{B2} which are individually estimated for the two objects A and B related to the different directions. As described above, the plurality of normal line vectors calculated in Step S107 are normal line vectors each having a range from the minimum-ratio normal line vector to the maximum-ratio normal line vector (for the object A in the drawing, a range from the minimum-ratio normal line vector N_{A1} to the maximum-ratio normal line vector N_{A2} and, for the object B in the drawing, a range from the minimum-ratio normal line vector N_{B1} to the maximum-ratio normal line vector N_{B2}). Accordingly, the representative normal line determination unit 26 calculates a representative value (N1 in the drawing, which is hereinafter referred to as the "minimum-ratio representative normal line vector") of the plurality of minimum-ratio normal line vectors and a representative value (N2 in the drawing, which is hereinafter referred to as the "maximum-ratio representative normal line vector") of the plurality of maximum-ratio normal line vectors and calculates a representative value (N in the drawing, which is, e.g., a mean value) of the minimum-ratio representative normal line vector and the maximum-ratio representative normal line vector to determine the representative normal line vector. When the representative normal line vector is determined, the processing advances to Step S109.

In Step S109, the projective transformation based on the representative normal line vector is performed on the query image. The transformation unit 27 performs the projective transformation (which is perspective correction based on homography transformation in the present embodiment) on the query image such that the representative normal line vector determined in Step S108 faces front to obtain the corrected query image. In other words, the transformation unit 27 calculates, on the basis of the representative normal line vector, the homography matrix such that, in the corrected query image when the corrected query image after the projective transformation is assumed to be in an XY plane, XY-axis components of the representative normal line vector are zero (such that only a Z-axis component is present), and performs the homography transformation on the query image by using the homography matrix.

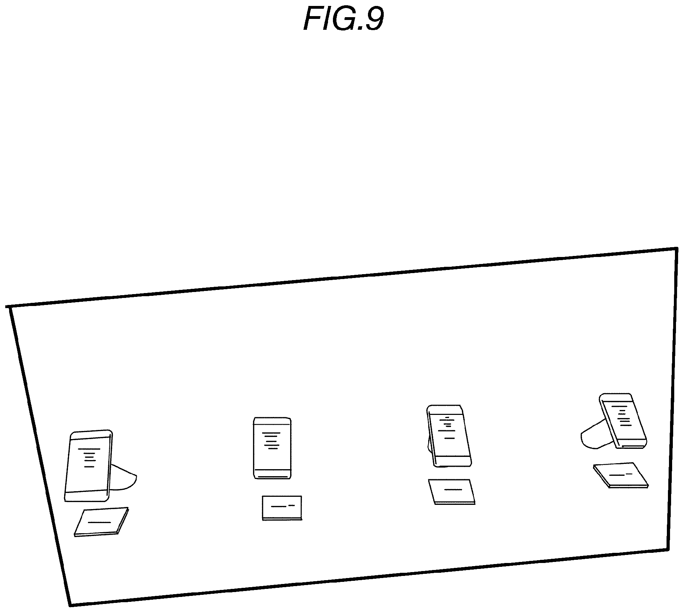

Fig. 9 is a diagram illustrating an example in which geometrical transformation based on the representative normal line vector is performed on the query image in the present embodiment. According to the present diagram, it will be understood that, through the geometrical transformation performed on the basis of the representative normal line vector representing the plurality of objects in the query image, the entire query image including the plurality objects is in a state appropriate for the character recognition, and accuracy of the character recognition of the entire query image is improved. Additionally, it will be understood that, even after the image transformation, a positional relationship between each of the smartphones and the product information card corresponding to the smartphone in which the position of the smartphone and the position of the product information card are vertically aligned is substantially maintained. When the projective transformation of the query image based on the representative normal line vector is completed, the processing advances to Step S110.

In Step S110, characters image-captured in the corrected query image are recognized. The character recognition unit 28 performs optical character recognition (OCR) processing on the corrected query image obtained in Step S109 to recognize the characters image-captured in the corrected query image. Then, the character recognition unit 28 outputs a result of the character recognition, and the processing illustrated in the present flow chart is ended. By having a flow of processing as described above, the processing illustrated in the present flow chart can improve the accuracy of the recognition of the characters written on the plurality of objects image-captured in the query image in the image transformation performed once on the query image and in the character recognition processing performed once thereon.

### <Effects>

With the image processing apparatus, the image processing method, and the image processing program each according to the present embodiment, it is possible to perform image transformation appropriate for character recognition on a query image in which a plurality of regions are image-captured and consequently improve accuracy of the character recognition for the query image in which the plurality of regions are image-captured.

### <Variation>

Note that, in the embodiment described above, the description has been given by using the processing when the shape data has the range as the example but, as described above, the shape data may also be data which uniquely determines at least a front shape of each of objects related to the same type or attribute. When such shape data is used, calculation of a minimum-ratio normal line vector and a maximum-ratio normal line vector for each of the objects is omitted, and a representative normal line vector is determined on the basis of a normal line vector obtained for each of the plurality of objects on a one-to-one basis.

### [Reference Signs List]

- 1: Image processing apparatus

## Claims

1. An image processing apparatus comprising:
a query image acquisition means that acquires a query image in which a plurality of objects are image-captured;
a normal line estimation means that estimates, for each of the plurality of objects image-captured in the query image, a normal line direction indicating a front direction of the object;
a representative normal line determination means that determines a representative normal line direction representing an entirety of the query image on the basis of the plurality of normal line directions estimated for the plurality of objects; and
a transformation means that geometrically transforms the query image on the basis of the representative normal line direction to generate a corrected query image.

2. The image processing apparatus according to claim 1, further comprising:
a shape data acquisition means that acquires shape data related to a front shape of each of the objects, wherein
the normal line estimation means estimates, for each of the plurality of objects, the normal line direction of the object in accordance with a result of comparison between the front shape of the object specified in accordance with the shape data and an object image in the query image.

3. The image processing apparatus according to claim 2, wherein
the shape data is shape data having a range for the objects of the same type or attribute,
the normal line estimation means calculates, for each of the plurality of objects, the normal line direction related to the minimum value in the range of the shape data and the normal line direction related to the maximum value therein, and
the representative normal line determination means determines as the representative normal line direction the normal line direction representing the plurality of normal line directions related to the minimum value in the range of the shape data which are estimated for the plurality of individual objects and the plurality of normal line directions related to the maximum value in the range of the shape data which are estimated for the plurality of individual objects.

4. The image processing apparatus according to claim 2, further comprising:
a homography matrix calculation means that calculates, for each of the plurality of objects, a homography matrix between the front shape of the object specified in accordance with the shape data and the object image in the query image, wherein
the normal line estimation means estimates, for each of the plurality of objects, the normal line direction of the object on the basis of the homography matrix calculated by the homography matrix calculation means.

5. The image processing apparatus according to claim 4, wherein
the shape data is shape data having a range for the objects of the same type or attribute,
the homography matrix calculation means calculates, for each of the plurality of objects, the homography matrix related to a minimum value in the range of the shape data and the homography matrix related to a maximum value therein,
the normal line estimation means calculates, for each of the plurality of objects, the normal line direction related to the minimum value in the range of the shape data and the normal line direction related to the maximum value therein, and
the representative normal line determination means determines as the representative normal line direction the normal line direction representing the plurality of normal line directions related to the minimum value in the range of the shape data which are estimated for the plurality of individual objects and the plurality of normal line directions related to the maximum value in the range of the shape data which are estimated for the plurality of individual objects.

6. The image processing apparatus according to claim 3 or 5, wherein
the shape data includes an aspect rate of each of the objects, which is held in advance, and
the range is a range of the aspect ratio.

7. The image processing apparatus according to claim 1, further comprising:
an object detection means that uses a machine learning model which outputs, in response to an input of a type or attribute of the object intended to be a target of character recognition, a position or range in the query image, in which the object of the type or attribute is image-captured, to detect the plurality of objects image-captured in the query image; and
a character recognition means that performs character recognition processing on the corrected query image to recognize a character written on the object intended to be the target of the character recognition.

8. The image processing apparatus according to claim 1, wherein
the normal line estimation means estimates, for each of the plurality of objects image-captured in the query image, a normal line vector indicating the front direction of the object and
the representative normal line determination means determines as the representative normal line direction a mean of a plurality of the normal line vectors estimated for the plurality of objects.

9. The image processing apparatus according to claim 1, wherein the transformation means performs projective transformation on the query image such that the representative normal line direction corresponds to the front direction of the image after the transformation.

10. An image processing method of causing a computer to perform:
a query image acquisition step of acquiring a query image in which a plurality of objects are image-captured;
a normal line estimation step of estimating, for each of the plurality of objects image-captured in the query image, a normal line direction indicating a front direction of the object;
a representative normal line determination step of determining a representative normal line direction representing an entirety of the query image on the basis of the plurality of normal line directions estimated for the plurality of objects; and
a transformation step of geometrically transforming the query image on the basis of the representative normal line direction to generate a corrected query image.

11. An image processing program for causing a computer to function as:
a query image acquisition means that acquires a query image in which a plurality of objects are image-captured;
a normal line estimation means that estimates, for each of the plurality of objects image-captured in the query image, a normal line direction indicating a front direction of the object;
a representative normal line determination means that determines a representative normal line direction representing an entirety of the query image on the basis of the plurality of normal line directions estimated for the plurality of objects; and
a transformation means that geometrically transforms the query image on the basis of the representative normal line direction to generate a corrected query image.
